# EUROPEAN PATENT SPECIFICATION

(11) **EP 3 277 694 B1**
(45) Date of publication and mention of the grant of the patent: **05.10.2022**
(21) Application number: 15886856.2
(22) Date of filing: 31.03.2015
(51) Int. Cl.: C01B 35/06, C07F 5/02, C07F 5/04

(54) **METHOD OF MAKING LITHIUM DIFLUORO (OXALATO) BORATE**
VERFAHREN ZUR HERSTELLUNG VON DIFLUOR(OXALAT)BORAT
PROCÉDÉ DE FABRICATION DE LITHIUM DIFLUORO (OXALATO) BORATE

(43) Date of publication of application: 07.02.2018
(73) Proprietor: Bayerische Motoren Werke Aktiengesellschaft, 80809 München (DE)
(72) Inventor: WU, Peng, Tianjin 300000 (CN); GENTSCHEV, Ann-Christin, 80637 München (DE); LINTZ, Claudia, 83052 Bruckmüehl (DE); KIM, Sung-Jin, 80995 München (DE); ZHANG, Ning, 80809 München (DE); DETIG-KARLOU, Kamelia, 82049 Pullach (DE); LIAN, Fang, Beijing 100083 (CN)
(86) International application number: PCT/CN2015/075438
(87) International publication number: WO 2016/154870

(56) References cited:
- CN-A- 101 643 481
- CN-A- 101 648 963
- CN-A- 103 374 023
- DATABASE WPI Week 201017 Thomson Scientific, London, GB; AN 2010-C09994 XP002783149, -& CN 101 643 481 A (ZHANGJIAGANG GUOTAI HUARONG NEW CHEM MAT) 10 February 2010 (2010-02-10)
- DATABASE WPI Week 201513 Thomson Scientific, London, GB; AN 2015-119902 XP002783150, -& CN 104 230 970 A (UNIV CENT SOUTH) 24 December 2014 (2014-12-24)
- DATABASE WPI Week 201403 Thomson Scientific, London, GB; AN 2014-A58415 XP002783151, -& CN 103 374 023 A (UNIV LANZHOU TECHNOLOGY) 30 October 2013 (2013-10-30)
- DATABASE WPI Week 201024 Thomson Scientific, London, GB; AN 2010-C44459 XP002783152, & CN 101 648 963 A (ZHANGJIAGANG GUOTAI HUARONG NEW CHEM MAT) 17 February 2010 (2010-02-17)

## Description

### FIELD OF THE INVENTION

The invention relates to a method of making lithium difluoro(oxalato)borate Li[BF₂C₂O₄] (CAS no 409071-16-5) in mixture with lithium tetrafluoroborate, using lithium oxalate and a complex of boron trifluoride with an ether as starting materials. Said known compound Li[BF₂C₂O₄] may be used as conducting salt in an electrolyte used in a secondary lithium ion battery.

### BACKGROUND OF THE INVENTION

Lithium difluoro(oxalato)borate Li[BF₂C₂O₄] is - due to its wide temperature stability window, its good solubility in organic carbonate systems and its relatively good ion conductivity in an electrolyte at low temperatures - a valuable conducting salt in electrolytes used in a secondary lithium ion battery.

CN 102070661 relates to a method of preparing Li[BF₂C₂O₄] using as starting materials lithium oxalate and a complex of boron trifluoride with diethyl ether in a aprotic solvent under the influence of a catalyst. State-of-the-art catalysts are chloride-containing catalysts such as silicon tetrachloride, aluminum trichloride, or boron trichloride. According to CN 102070661 the reaction is simple to operate and can be used for obtaining the product in a purity of more than 99.9 %, and does not need purification by recrystallization.

However, chloride-containing catalysts typically result in the formation of chloride-containing side-products such as LiCI which may contaminate the formed and isolated lithium difluoro(oxalato)borate. Even if LiCI is present in low concentration, said side-product may be oxidized to chlorine at the cathode of a secondary ion battery when using the formed and contaminated lithium difluoro(oxalato)borate as a conducting salt in an electrolyte used in said secondary lithium ion battery. It is evident that the formation of chlorine impairs the performance of the battery. Removal of LiCI may be complex, and may thus negatively affect the economy of the process.

CN 103 374 023 discloses a co-production method for lithium oxalyldifluoroborate and lithium tetrafluoroborate. The co-production method comprises the following steps of: (1) uniformly mixing compounds containing lithium salts and BF₃ in an aprotic nonpolar solvent or a solvent with a low aprotic polarity in a molar ratio of (1: 1: 3)-(1: 1.25: 3.75) of lithium to boron to fluorine; (2) refluxing for 1-48 hours at a temperature of 30-100 °C, then performing solid-liquid separation, and drying the obtained solid substance to obtain crude products LiODFB and LiBF4; and (3) performing purification and separation on the obtained crude products for one time, or performing purification for many times.

CN 101 648 963 discloses a synthesizing process for simultaneously obtaining lithium difluoro-oxalato-borate and lithium tetrafluoroborate with favorable performance, which comprises the following steps: (1) leading a fluorine-contained compound, a boron-contained compound, a lithium-contained compound and an oxalate-contained compound to react in a reaction medium at the reaction pressure of 0.1-1 MPa and the temperature of 0-100 °C, wherein the molar ratio of lithium element, fluorine element, boron element and oxalate ion is (2-3):(5-6):6:2:1; generating reaction liquid containing the lithium difluoro-oxalato-borate and the lithium tetrafluoroborate; (2) carrying out initial separation on the lithium difluoro-oxalato-borate and the lithium tetrafluoroborate in the reaction liquid and then carrying out further extraction separation by an organic solvent which can extract the lithium difluoro-oxalato-borate or the lithium tetrafluoroborate; and (3) respectively carrying out recrystallization and vacuum drying to obtain the battery-grade lithium difluoro-oxalato-borate and the lithium tetrafluoroborate. The invention is suitable for industrially producing two lithium salts which have favorable performance and are used for a lithium ion battery.

### OBJECTS OF THE INVENTION

It is the object of the invention to develop a process for the manufacture of lithium difluoro(oxalato)borate using as starting materials lithium oxalate and a complex of boron trifluoride with an ether, wherein the formation of chloride-containing side-products is at least suppressed or even avoided.

### SUMMARY OF THE INVENTION

The inventors of the present invention discovered that in the process known from the prior art as discussed in the Background section above, chloride-containing catalysts such as silicon tetrachloride, aluminum trichloride, or boron trichloride may be surprisingly omitted while still resulting in the target compound Li[BF₂C₂O₄], and thus the above-discussed side-reaction is avoided. In the method according to the invention, lithium tetrafluoroborate is formed as a side-product and is present in the formed and isolated lithium difluoro(oxalato)borate. Since lithium tetrafluoroborate may also be used as a conducting salt in an electrolyte of a secondary lithium ion battery, it may be advantageously kept in the formed and isolated lithium difluoro(oxalato)borate. Alternatively, lithium difluoro(oxalato)borate may be separated off from lithium tetrafluoroborate by a simple and economic process. Thus, the new process for making Li[BF₂C₂O₄] is advantageous both in view of technical and economic aspects.

The invention relates to a method of making a mixture of lithium difluoro(oxalato)borate Li[BF₂C₂O₄] and lithium tetrafluoroborate LiBF₄, as defined in claim 1.

In one embodiment, the complex is a complex of boron trifluoride with dimethyl ether, diethyl ether, or tetrahydrofuran.

In one embodiment, the complex is a complex of boron trifluoride with diethyl ether, i.e. boron trifluoride diethyl etherate.

In one embodiment, said aprotic organic solvent is selected from the group consisting of ethylene carbonate, propylene carbonate, butylene carbonate, dimethyl carbonate, diethyl carbonate, ethyl methyl carbonate, methyl propyl carbonate, butyl methyl carbonate, ethyl propyl carbonate, dipropyl carbonate, cyclopentanones, sulfolane, dimethyl sulfoxide, 3-methyl-1,3-oxazolidine-2-one, γ-butyrolactone, 1,2-diethoxymethane, tetrahydrofuran, 2-methyltetrahydrofuran, 1,3-dioxolane, methyl acetate, ethyl acetate, nitromethane, acetonitrile, and 1,3-propane sultone, or a mixture of two or more thereof.

In one embodiment, the solvent is selected from dialkyl carbonate or diaryl carbonate, preferably wherein the solvent is selected from the group consisting of dimethyl carbonate, diethyl carbonate, dipropyl carbonate, diisopropyl carbonate, methyl ethyl carbonate.

In one embodiment, step (T2) is performed at a temperature of from 60 to 100 °C in a sealed container.

In one embodiment, the reaction time is in the range of from 6 to 32 hours.

The method further comprises step (U):
(U) separating off lithium difluoro(oxalato)borate and lithium tetrafluoroborate in the form of a solution in the solvent employed in step (S) from the mixture obtained in step (T1) or (T2).

The method further comprises step (V):
(V) isolating a mixture of lithium difluoro(oxalato)borate and lithium tetrafluoroborate from the solution obtained in step (U).

Also disclosed is a method of making lithium difluoro(oxalato)borate Li[BF₂C₂O₄], comprising the method according to the invention, and further comprising at least step (W):
(W) separating off lithium difluoro(oxalato)borate Li[BF₂C₂O₄] from lithium tetrafluoroborate from the mixture obtained in step (V).

In one embodiment, step (W) comprises at least steps (W1) to (W6):
(W1) dissolving the mixture comprising lithium difluoro(oxalate)borate Li[BF₂C₂O₄] and lithium tetrafluoroborate obtained according to the method of the invention in a first solvent (Z1) and a second solvent (Z2);
(W2) optionally heating the mixture obtained in step (W1);
(W3) filtering, respectively centrifuging the mixture obtained in step (W1) or (W2), to obtain a filtrate, respectively a supernatant;
(W4) optionally concentrating the filtrate, respectively the supernatant, obtained in step (W3);
(W5) crystallizing lithium difluoro(oxalate)borate from the filtrate, respectively from the supernatant, obtained in step (W3), or crystallizing lithium difluoro(oxalate)borate from the concentrated filtrate, respectively from the concentrated supernatant, obtained in step (W4);
(W6) isolating the crystallized lithium difluoro(oxalate)borate obtained in step (W5);
wherein the first solvent (Z1) is selected from the group consisting of tetrahydrofuran, poly propylene carbonate, methyl carbonate, diethyl carbonate, butylene carbonate, methyl cyanide, propane nitrile, butyronitrile, dimethyl formamide, sulfolane, dimethyl sulfoxide, or a mixture of two or more thereof; and
the second solvent (Z2) is selected from the group consisting of ethyl acetate, n-hexane, benzene, toluene; dimethylbenzene, gamma-butyrolacton, diethyl ether; carbon tetrachloride, dioxolane, or a mixture of two or more thereof.

In one embodiment, solvent (Z1) is selected from dimethyl carbonate or diethyl carbonate, and solvent (Z2) is n-hexane.

In one embodiment, the volume ratio of dimethyl carbonate or diethyl carbonate, to n-hexane is in the range of from 0.5 : 1 to 1.5 : 1.

### BRIEF DESCRIPTION OF THE DRAWINGS

In the figures show
- **Fig. 1**: a XRD spectra of purified lithium difluoro(oxalato)borate (y-axis: intensity); and
- **Fig. 2**: a FT-IR spectra of purified lithium difluoro(oxalato)borate (y-axis: transmission in %; x-axis: wavenumbers in cm⁻¹).

### DETAILED DESCRIPTION OF THE INVENTION

The invention relates to a method of making a mixture of lithium difluoro(oxalato)borate Li[BF₂C₂O₄] and lithium tetrafluoroborate LiBF₄, as defined in claim 1.

The reaction is carried out in the absence of a chloride-containing compound such as silicon tetrachloride, aluminum trichloride, or boron trichloride.

Step (S) of the method according to the invention requires the mixing of lithium oxalate and boron trifluoride in the form of a complex with an ether in an organic solvent. Said starting materials used in step (S) are known in the art or may be produced according to known methods.

Lithium oxalate is a known compound and is commercially available (CAS no 553-91-3).

Complexes of boron trifluoride with an ether are also known or may be prepared according to known methods.

In one embodiment, the complex used in step (S) is a complex of boron trifluoride with tetrahydrofuran (CAS no 462-34-0).

In another embodiment, the complex used in step (S) is a complex of boron trifluoride with diethyl ether (boron trifluoride diethyl etherate) (CAS no 6681-36-3).

In another embodiment, the complex used in step (S) is a complex of boron trifluoride with dimethyl ether (boron trifluoride dimethyl etherate) (CAS no 353-42-4).

In one embodiment of step (S), said organic solvent may be provided and said lithium oxalate and boron trifluoride in the form of a complex with an ether may be added subsequently or simultaneously to said organic solvent.

In another embodiment, lithium oxalate may be provided in an organic solvent, e.g. in the form of a suspension, and said boron trifluoride in the form of a complex with an ether may be added. In one embodiment, said boron trifluoride in the form of a complex with an ether is also provided in an organic solvent.

Accordingly, in one embodiment, said step (S) comprises at least steps (S1) and (S2):
(S1) providing lithium oxalate in an organic solvent;
(S2) providing boron trifluoride in the form of a complex with an ether, preferably in an organic solvent.

Basically, any organic solvent may be used which is inert towards lithium oxalate and boron trifluoride in the form of a complex with an ether.

In one embodiment, said organic solvent is a non-protic solvent, i.e. an aprotic solvent. The term "*aprotic solvent*" encompasses any solvent from which no protons may be removed under the conditions employed in step (S) or (S1) or (S2) or (T1) or (T2).

In one embodiment, the organic solvent used in step (S) is a solvent which is commonly used in an electrolyte of a secondary lithium ion battery.

In one embodiment, said organic solvent is selected from the group consisting of ethylene carbonate, propylene carbonate, butylene carbonate, dimethyl carbonate, diethyl carbonate, ethyl methyl carbonate, methyl propyl carbonate, butyl methyl carbonate, ethyl propyl carbonate, dipropyl carbonate, cyclopentanones, sulfolane, dimethyl sulfoxide, 3-methyl-1,3-oxazolidine-2-one, γ-butyrolactone, 1,2-diethoxymethane, tetrahydrofuran, 2-methyltetrahydrofuran, 1,3-dioxolane, methyl acetate, ethyl acetate, nitromethane, acetonitrile, and 1,3-propane sultone, or a mixture of two or more thereof.

In another embodiment, said solvent is selected from carbonates such as cyclic or aliphatic or aromatic carbonates.

In one embodiment, said solvent is selected from dialkyl carbonates or diaryl carbonates.

Preferably, said solvent is selected from the group consisting of dimethyl carbonate, diethyl carbonate, dipropyl carbonate, diisopropyl carbonate, methyl ethyl carbonate.

Step (T2) requires the heating of the mixture obtained in step (S). Preferably, the heating in step (T1) or (T2) is performed at a temperature ≥ 30 °C or ≥ 40 °C or ≥ 50 °C or ≥ 60 °C or ≥ 70 °C.

In one embodiment, the heating in step (T2) is performed at a temperature in the range of from 30 to 200 °C or from 40 to 120 °C or from 60 to 100 °C.

The reaction is carried out above atmospheric pressure, preferably under inert gas such as nitrogen.

Step (T2) mandatorily requires a pressure above atmospheric pressure.

In one embodiment, the pressure employed in step (T2) is above 1 bar or above 1.5 bars or above 2.0 bars or above 2.5 bars or above 5 bars or above 10 bars.

In another embodiment, the pressure is in the range of from ≥ 1 bar to 100 bars, or 1.5 to 50 bars, or 2 to 30 bars.

According to the invention, the reaction according to step (T2) is carried out in a sealed container such that during heating a pressure is developed.

In one embodiment, the reaction time in step (T2) is - depending on the temperature and pressure - in the range of from 1 h to several days.

Preferably, in step (T2) a temperature of from 60 to 100 °C such as 80 °C is employed, and the reaction is carried out in a sealed container, preferably under pressure. This embodiment may be termed as "*solvothermal process*" *or "solvothermal process in a sealed container*". It has, additionally to beneficial product properties, the advantage of being less deleterious to the environment than a process which is conducted in an opened container. In one embodiment, step (T1) may also be performed in a sealed container.

In one embodiment, if in step (T2) a temperature of from 60 to 100 °C such as 80 °C is employed, and if the reaction is carried out in a sealed container, i.e. under pressure, the reaction time in step (T2) is in the range of from 6 to 32 h such as about 24 h.

Subsequent to step (T2), a mixture of lithium difluoro(oxalato)borate and lithium tetrafluoroborate is separated off.

Lithium difluoro(oxalato)borate and lithium tetrafluoroborate are separated off in the form of a solution in the solvent employed in step (S), respectively steps (T1) or (T2). Thus, the method according to the invention comprises at least step (U):
(U) separating off lithium difluoro(oxalato)borate and lithium tetrafluoroborate in the form of a solution in the solvent employed in step (S) from the mixture obtained in step (T2).

Separating off dissolved lithium difluoro(oxalato)borate and lithium tetrafluoroborate from the mixture obtained in step (T2) according to step (U) may be performed according to known methods.

In one embodiment, the mixture obtained in step (T2) may be subjected to filtration. In one embodiment, lithium difluoro(oxalato)borate and lithium tetrafluoroborate remain in the filtrate. In another embodiment, the mixture obtained in step (T1) or (T2) may be subjected to centrifugation. In one embodiment, lithium difluoro(oxalato)borate and lithium tetrafluoroborate remain in the supernatant liquid.

Subsequent to step (U), the mixture of lithium difluoro(oxalato)borate and lithium tetrafluoroborate may be isolated from the solution obtained in step (U).

Said isolation may be performed to known methods. In one embodiment, the mixture obtained in step (U) is cooled down, wherein the target compounds start precipitating. Then, they may be isolated by filtration or centrifugation. In another embodiment, the solvent may distilled off, and the target compounds are isolated as the remainder. In another embodiment, the target compounds are isolated by a combination of the two mentioned methods.

Accordingly, the method according to the invention comprises at least step (V):
(V) isolating a mixture of lithium difluoro(oxalato)borate and lithium tetrafluoroborate from the solution obtained in step (U).

If necessary, the isolated lithium difluoro(oxalato)borate and lithium tetrafluoroborate may be dried. In one embodiment, drying may be performed by subjecting the isolated product to microwaves, optionally in vacuum.

The product obtained according to step (V), optionally after drying, contains lithium tetrafluoroborate as a side-product. Since lithium tetrafluoroborate may also be used as a conducting salt in an electrolyte of a secondary lithium ion battery, it may be advantageously kept in the formed and isolated lithium difluoro(oxalato)borate. Thus, there is no need to subject the formed and isolated lithium difluoro(oxalato)borate to further purification steps in order to remove said side-product lithium tetrafluoroborate.

In one embodiment, depending on the reaction conditions, the weight ratio of lithium difluoro(oxalato)borate to lithium tetrafluoroborate is in the range of from 1 : 0.001 to 1 : 0.5.

The target compound does not contain any chloride-containing side-product developed in the course of the reaction and which might negatively affect the properties of the obtained target compound.

Disclosed is also a method in which the mixture obtained according to the method of the invention may be further subjected to purification.

In one embodiment, lithium difluoro(oxalato)borate and lithium tetrafluoroborate may be separated from one another.

This separation may be performed according to methods which are disclosed in CN 101265176.

Thus, a method of making lithium difluoro(oxalato)borate is disclosed, comprising the method according to the invention, and further comprising step (W):
(W) separating off lithium difluoro(oxalate)borate Li[BF₂C₂O₄] from lithium tetrafluoroborate from the mixture obtained according to the method according to the invention.

In one embodiment, separation is performed such that the mixture comprising lithium difluoro(oxalate)borate Li[BF₂C₂O₄] and lithium tetrafluoroborate is subjected to at least two different solvents having different solution properties. The mixture of the salts is at least partially dissolved in said solvents, optionally supported by heating, the hot solution is filtered or centrifuged, and the filtrate or supernatant is optionally concentrated. Upon cooling, lithium difluoro(oxalate)borate crystallizes which may then be separated off, preferably by filtration or centrifugation. After drying, e.g. drying by microwaves, purified lithium difluoro(oxalate)borate is obtained.

In one embodiment, the first solvent (Z1) is selected from the group consisting of tetrahydrofuran, poly propylene carbonate, methyl carbonate, diethyl carbonate, butylene carbonate, methyl cyanide, propane nitrile, butyronitrile, dimethyl formamide, sulfolane, dimethyl sulfoxide, or a mixture of two or more thereof; and
the second solvent (Z2) is selected from the group consisting of ethyl acetate, n-hexane, benzene, toluene; dimethylbenzene, gamma-butyrolacton, diethyl ether; carbon tetrachloride, dioxolane, or a mixture of two or more thereof.

In a preferred embodiment, solvent (Z1) is selected from dimethyl carbonate or diethyl carbonate, and solvent (Z2) is n-hexane.

In one embodiment, the volume ratio of dimethyl carbonate or diethyl carbonate, to n-hexane is in the range of from 0.5 : 1 to 1.5 : 1.

Accordingly, step (W) preferably comprises at least steps (W1) to (W6):
(W1) dissolving the mixture comprising lithium difluoro(oxalate)borate Li[BF₂C₂O₄] and lithium tetrafluoroborate obtained according to the method according to the invention in a first solvent (Z1) and a second solvent (Z2);
(W2) optionally heating the mixture obtained in step (W1);
(W3) filtering, respectively centrifuging the mixture obtained in step (W1) or (W2), to obtain a filtrate, respectively a supernatant;
(W4) optionally concentrating the filtrate, respectively the supernatant, obtained in step (W3);
(W5) crystallizing lithium difluoro(oxalate)borate from the filtrate, respectively from the supernatant, obtained in step (W3), or crystallizing lithium difluoro(oxalate)borate from the concentrated filtrate, respectively from the concentrated supernatant, obtained in step (W4);
(W6) isolating the crystallized lithium difluoro(oxalate)borate obtained in step (W5);
wherein the first solvent (Z1) is selected from the group consisting of tetrahydrofuran, poly propylene carbonate, methyl carbonate, diethyl carbonate, butylene carbonate, methyl cyanide, propane nitrile, butyronitrile, dimethyl formamide, sulfolane, dimethyl sulfoxide, or a mixture of two or more thereof; and
the second solvent (Z2) is selected from the group consisting of ethyl acetate, n-hexane, benzene, toluene; dimethylbenzene, gamma-butyrolacton, diethyl ether; carbon tetrachloride, dioxolane, or a mixture of two or more thereof.

### EXAMPLES

### Example 1

5 g Li₂C₂O₄ were dissolved in 40 mL dimethyl carbonate at room temperature and stirred to obtain a suspension. 7.10 g C₄H₁₀BF₃O were slowly added to the resulting suspension with stirring at 50 °C for 60 min. Then, the suspension was moved into a teflon pot and sealed in a stainless steel container. The reaction was conducted at 80 °C for 24 h. After cooling to room temperature, the liquor with lithium difluoro(oxalato)borate was separated from residue by filtration. The liquor was rotary evaporated at 60 °C for 4 h to distill the solvent. Then, the oversaturated solution was devitrified at low temperature (below - 5 °C) for 15 min, wherein a white solid was obtained after vacuum filtration. This solid was dried via microwave and at 55 °C for 48 h under -0.85 MPa vacuum. A mixture of lithium difluoro(oxalato)borate and lithium tetrafluoroborate was obtained.

### Example 2 (not belonging to the invention)

5 g Li₂C₂O₄ were dissolved in 40 mL diethyl carbonate at room temperature and stirred to obtain a suspension. 14.30 g C₄H₁₀BF₃O were slowly added to the resulting suspension with stirring for 60 min. Then, the suspension was moved into a teflon pot and sealed in a stainless steel container. The reaction was conducted at 90 °C for 16 h. After cooling to room temperature, the liquor with lithium difluoro(oxalato)borate was separated from residue by filtration. The liquor was rotary evaporated at 80 °C for 4 h to distill the solvent. Then, the oversaturated solution was devitrified at low temperature (-10--5 °C) for 15 min. A white solid was obtained after vacuum filtration. This solid was dried via microwave and at 55 °C for 48 h under -0.85 MPa vacuum. A mixture of lithium difluoro(oxalato)borate and lithium tetrafluoroborate was obtained.

The lithium difluoro(oxalato)borate and lithium tetrafluoroborate mixture was dissolved in dimethyl carbonate and cyclohexane in a volume ratio of 1:1, stirred and heated to boil for half an hour. The suspension was hot filtrated to remove the insoluble impurities. The clear filtrate was rotary evaporated to saturation. The saturated solution was cooled to 0-5 °C to precipitate (stirred all the time). The solid was filtered and dried at 60°C in vacuum (-0.85MPa) for 24h, wherein purified lithium difluoro(oxalato)borate was obtained.

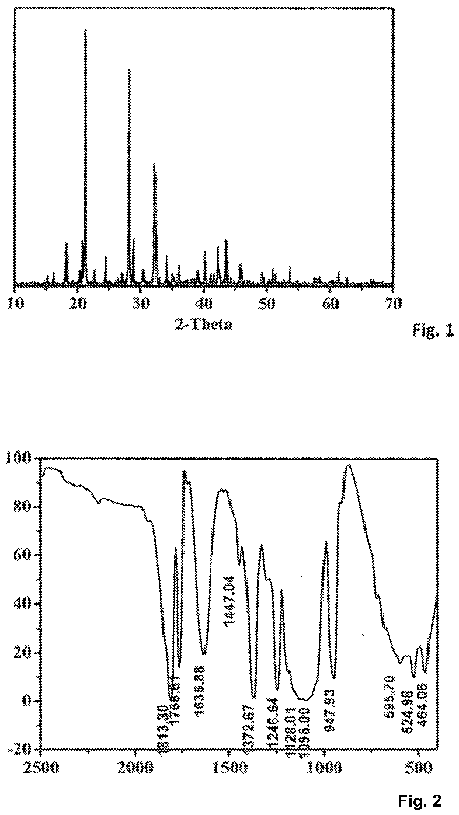

**Fig. 1** shows a XRD spectra of the isolated and purified lithium difluoro(oxalato)borate, and **Fig. 2** a FT-IR spectrum.

## Claims

1. Method of making a mixture of lithium difluoro(oxalato)borate Li[BF₂C₂O₄] and lithium tetrafluoroborate LiBF₄ as conducting salt in an electrolyte of a secondary lithium ion battery, comprising at least steps (S), (T2), (U) and (V):
(S) mixing lithium oxalate and a complex of boron trifluoride with an ether in an organic solvent;
(T2) heating the mixture obtained in step (S) under a pressure above atmospheric pressure;
(U) separating off lithium difluoro(oxalato)borate and lithium tetrafluoroborate in the form of a solution in the solvent employed in step (S) from the mixture obtained in step (T2), wherein dissolved lithium difluoro(oxalato)borate and lithium tetrafluoroborate are separated off by filtration or centrifugation from the mixture obtained in step (T2);
(V) isolating a mixture of lithium difluoro(oxalato)borate and lithium tetrafluoroborate from the solution obtained in step (U), wherein the mixture obtained in step (U) is cooled down, wherein the target compounds start precipitating and are isolated by filtration or centrifugation; or the solvent may be distilled off, and the target compounds are isolated as the remainder;
wherein the organic solvent is selected from dialkyl carbonate or diaryl carbonate;
wherein the reaction is carried out in the absence of a chloride-containing compound;
wherein the reaction according to step (T2) is carried out in a sealed container such that during heating a pressure is developed; and
wherein the formed and isolated lithium difluoro(oxalato)borate in step (V) is not subjected to further purification steps in order to remove lithium tetrafluoroborate from the mixture of lithium difluoro(oxalato)borate and lithium tetrafluoroborate.

2. Method of claim 1, wherein the complex is a complex of boron trifluoride with dimethyl ether, diethyl ether, or tetrahydrofuran.

3. Method of claim 1 or 2, wherein the complex is a complex of boron trifluoride with diethyl ether, i.e. boron trifluoride diethyl etherate.

4. Method of any one of claims 1 to 3, wherein the solvent is selected from the group consisting of dimethyl carbonate, diethyl carbonate, dipropyl carbonate, diisopropyl carbonate, methyl ethyl carbonate.

5. Method of any one of claims 1 to 4, wherein step (T2) is performed at a temperature of from 60 to 100 °C in a sealed container.

6. Method of claim 5, wherein the reaction time is in the range of from 6 to 32 hours.

## Patentansprüche

1. Verfahren zur Herstellung einer Mischung von Lithiumdifluoro(oxalato)borat Li[BF₂C₂O₄] und Lithiumtetrafluoroborat LiBF₄ als Leitsalz in einem Elektrolyten einer Lithiumionen-Sekundärbatterie, umfassend mindestens Schritte (S), (T2), (U) und (V) :
(S) Mischen von Lithiumoxalat und einem Komplex von Bortrifluorid mit einem Ether in einem organischen Lösungsmittel;
(T2) Erhitzen der in Schritt (S) erhaltenen Mischung unter einem Druck oberhalb von Normaldruck;
(U) Abtrennen von Lithiumdifluoro(oxalato)borat und Lithiumtetrafluoroborat in Form einer Lösung in dem in Schritt (S) eingesetzten Lösungsmittel aus der in Schritt (T2) erhaltenen Mischung, wobei gelöstes Lithiumdifluoro(oxalato)borat und Lithiumtetrafluoroborat durch Filtration oder Zentrifugation aus der in Schritt (T2) erhaltenen Mischung abgetrennt werden;
(V) Isolieren einer Mischung von Lithiumdifluoro(oxalato)borat und Lithiumtetrafluoroborat aus der in Schritt (U) erhaltenen Mischung, wobei die in Schritt (U) erhaltene Mischung abgekühlt wird, wobei die Zielverbindungen auszufallen beginnen und durch Filtration oder Zentrifugation isoliert werden; oder das Lösungsmittel abdestilliert werden kann und die Zielverbindungen als Rest isoliert werden;
wobei das organische Lösungsmittel aus Dialkylcarbonat oder Diarylcarbonat ausgewählt wird;
wobei die Reaktion in Abwesenheit einer chloridhaltigen Verbindung durchgeführt wird;
wobei die Reaktion gemäß Schritt (T2) in einem geschlossenen Behälter durchgeführt wird, so dass während des Erhitzens ein Druck entwickelt wird; und wobei das in Schritt (V) gebildete und isolierte Lithiumdifluoro(oxalato)borat keinen weiteren Reinigungsschritten zur Entfernung von Lithiumtetrafluoroborat aus der Mischung von Lithiumdifluoro(oxalato)borat und Lithiumtetrafluoroborat unterworfen wird.

2. Verfahren nach Anspruch 1, wobei es sich bei dem Komplex um einen Komplex von Bortrifluorid mit Dimethylether, Diethylether oder Tetrahydrofuran handelt.

3. Verfahren nach Anspruch 1 oder 2, wobei es sich bei dem Komplex um einen Komplex von Bortrifluorid mit Diethylether, d. h. Bortrifluoriddiethyletherat, handelt.

4. Verfahren nach einem der Ansprüche 1 bis 3, wobei das Lösungsmittel aus der Gruppe bestehend aus Dimethylcarbonat, Diethylcarbonat, Dipropylcarbonat, Diisopropylcarbonat und Methylethylcarbonat ausgewählt wird.

5. Verfahren nach einem der Ansprüche 1 bis 4, wobei Schritt (T2) bei einer Temperatur von 60 bis 100 °C in einem geschlossenen Behälter durchgeführt wird.

6. Verfahren nach Anspruch 5, wobei die Reaktionszeit im Bereich von 6 bis 32 Stunden liegt.

## Revendications

1. Procédé de préparation d'un mélange de difluoro(oxalato)borate de lithium Li[BF₂C₂O₄] et de tétrafluoroborate de lithium LiBF₄ en tant que sel conducteur dans un électrolyte d'une batterie lithium ion secondaire, comprenant au moins les étapes (S), (T2), (U) et (V) :
(S) mélange d'oxalate de lithium et d'un complexe de trifluorure de bore avec un éther dans un solvant organique ;
(T2) chauffage du mélange obtenu dans l'étape (S) sous une pression supérieure à la pression atmosphérique ;
(U) séparation du difluoro(oxalato)borate de lithium et du tétrafluoroborate de lithium sous la forme d'une solution dans le solvant employé dans l'étape (S) du mélange obtenu dans l'étape (T2), le difluoro(oxalato)borate de lithium et le tétrafluoroborate de lithium dissous étant séparés par filtration ou centrifugation du mélange obtenu dans l'étape (T2) ;
(V) isolement d'un mélange de difluoro(oxalato)borate de lithium et de tétrafluoroborate de lithium de la solution obtenue dans l'étape (U), le mélange obtenu dans l'étape (U) étant refroidi, les composés cibles commençant à précipiter et étant isolés par filtration ou centrifugation ; ou le solvant pouvant être distillé et les composés cibles étant isolés comme résidu ;
le solvant organique étant choisi parmi un carbonate de dialkyle et un carbonate de diaryle ;
la réaction étant mise en œuvre en l'absence d'un composé contenant du chlore ;
la réaction selon l'étape (T2) étant mise en œuvre dans un récipient scellé de sorte que pendant le chauffage une pression soit développée ; et
le difluoro(oxalato)borate de lithium formé et isolé dans l'étape (V) n'étant pas soumis à des étapes de purification supplémentaires afin d'éliminer du tétrafluoroborate de lithium du mélange de difluoro(oxalato)borate de lithium et de tétrafluoroborate de lithium.

2. Procédé selon la revendication 1, le complexe étant un complexe de trifluorure de bore avec du diméthyléther, du diéthyléther ou du tétrahydrofuranne.

3. Procédé selon la revendication 1 ou 2, le complexe étant un complexe de trifluorure de bore avec du diéthyléther, par ex. le diéthyléthérate de trifluorure de bore.

4. Procédé selon l'une quelconque des revendications 1 à 3, le solvant étant choisi dans le groupe constitué par le carbonate de diméthyle, le carbonate de diéthyle, le carbonate de dipropyle, le carbonate de diisopropyle, le carbonate de méthyle et d'éthyle.

5. Procédé selon l'une quelconque des revendications 1 à 4, l'étape (T2) étant réalisée à une température allant de 60 à 100 °C dans un récipient scellé.

6. Procédé selon la revendication 5, le temps de réaction étant dans la plage allant de 6 à 32 heures.
